# EUROPEAN PATENT APPLICATION

(11) **EP 2 055 651 A1**
(43) Date of publication of application: **06.05.2009**
(21) Application number: 08151108.1
(22) Date of filing: 06.02.2008
(51) Int. Cl.: B65D 81/20, B65B 11/52, B65B 31/04, B65B 9/04

(54) **Improved self-life vacuum skin packaging**

(30) Priority: 30.10.2007 EP 07119621
(71) Applicant: Cryovac, Inc., Duncan, S.C. 29334 (US)
(72) Inventor: Marquez, Roberto Daniel, B1878BPL, Buenos Aires (AR); Weller, Bart, 6545 AH, Nijmegen (NL)
(74) Representative: Ferri, Isabella

(57) **Abstract**

A packaging system to extend the shelf-life of food products comprising a product loaded on a gas barrier support (2), a gas barrier skin film (4) draped over the product and welded to the support by a vacuum skin packaging process and a gas barrier film (6;16) sealed to or surrounding the vacuum skin package, said gas barrier film defining a closed space over at least the skin portion of the vacuum skin packaged product, wherein said closed space is filled with an inert gas or gas mixture.

## Description

### Technical Field

The present invention relates to a food package and to a method of prolonging the shelf-life of a vacuum packaged food product. In particular the present invention relates to a vacuum package, preferably a vacuum skin package which is at least partly enclosed in a modified atmosphere of an inert gas.

### Background Art

Vacuum packaging is a well known process for the packaging of a wide variety of food products which involves placing an article inside a thermoplastic film package, removing air from the interior of the package and sealing the thermoplastic film so that the packaging material remains in close contact with the article surfaces when the package is closed. Among the vacuum packaging processes vacuum skin packaging is commonly employed for the packaging of products such as fresh and frozen meat and fish, cheese, processed meat (e.g. ham, bacon, salami), ready meals and the like.

The vacuum skin packaging process is in one sense a type of thermoforming process in which an article to be packaged serves as the mold for a forming web. An article may be placed on a rigid or semi-rigid support, that can be flat or shaped, e. g. tray-shaped, bowl- shaped or cup-shaped, and the supported article is then passed to a chamber where a top flexible film is drawn upward against a heated dome and the softened top flexible film is then draped over the article. The movement of the film is controlled by vacuum and/or air pressure, and in a vacuum skin packaging arrangement, the interior of the container is vacuumized before final welding of the top flexible film to the support member. In a vacuum skin package the upper heated film thus forms a tight skin around the product and is welded to the support. Vacuum skin packaging is described in many references, including FR 1,258,357, FR 1,286,018, AU 3,491,504, US RE 30,009, US 3,574,642, US 3,681,092, US 3,713,849, US 4,055,672, and US 5,346,735.

The terms "vacuum skin packaging" or "VSP" as used herein indicate that the product is packaged under vacuum and the space containing the product is evacuated from gases at the moment of packaging. The top flexible film is referred to as " skin-forming" or " skin" film.

Typically both the top skin film formed around the product and the material used for the support present a barrier to oxygen, air and other gases which are detrimental to the preservation or shelf-life of the food product.

Typically the shelf-life of vacuum skin packaged products like fresh red meat or poultry ranges from 2 to 3 weeks. Thus to allow for longer distribution cycles it would be desirable to prolong the shelf-life of vacuum packaged products.

### Disclosure of Invention

It has now been found that the shelf-life of vacuum skin packaged fresh products can be extended when at least the skin part of the package is blanketed under an inert atmosphere.

According to a first aspect of the present invention, there is provided a package which comprises a gas barrier support, a product loaded on the gas barrier support, a gas barrier skin film draped over the product and welded to the support by a vacuum skin packaging process and a gas barrier film surrounding or sealed to the vacuum skin packaged product, said barrier skin film defining a closed space over at least the skin portion of the vacuum skin packaged product, the closed space being filled with an inert gas or gas mixture. The barrier film may form a lid secured over the skin film draped over the product around the perimeter of the support. Alternatively, the barrier film may form a hermetically sealed envelope completely enclosing the vacuum skin package formed by the gas barrier support, the product and the gas barrier skin film draped over the product and welded to the support.

As used herein the terms " inert gas" and " inert gas mixture" refer to a gas or gas composition that has no or limited chemical activity with respect to the packaged product.

The inert gas or gas mixture enclosed in the space defined by the barrier film and at least the skin film draped over the surface of the product is believed to provide a further protection against the oxidative degradation of the product, thus extending its shelf-life within the package.

According to a second aspect of the present invention there is provided a packaging process comprising placing a product on a gas barrier support, placing a web of gas barrier skin film over the support and the product, allowing the gas barrier skin film to drape itself over the product and to weld to the part of the support not covered by the product to obtain a vacuum skin package, enclosing an inert gas or gas mixture in a closed space over at least the skin part of the vacuum skin package by means of a barrier film. The barrier film may be secured to the vacuum skin package over the skin film draped over the product, for instance by heat-sealing, or, alternatively, it may form a hermetically sealed envelope completely enclosing the vacuum skin package.

In general the term "gas barrier" or " gas barrier layer" is used with reference to the ability of a film or film layer to serve as a barrier to one or more gases. As used herein such term refers to a film, web or sheet of material which has an oxygen transmission rate at 0% relative humidity (hereinafter " RH" ) of less than 200 cm³/m².d.atm, less than 150 cm³/m².d.atm, less than 100 cm³/m².d.atm. The gas barrier material has an oxygen transmission rate at 100% RH of less than 500 cm³/m².d.atm, less than 400 cm³/m².d.atm, less than 300 cm³/m².d.atm . The oxygen transmission rate is measured according to ASTM D-3985 using an OX-TRAN instrument by Mocon. Unless otherwise stated oxygen transmission rate values throughout the text refer to measures made at 23°C.

All the packaging components of the package of the present invention, i.e. the support, the skin film and the barrier film, are provided with gas barrier properties. Each one of said packaging components may be a monolayer material of a gas barrier resin or, preferably, a multilayer material wherein at least one of the layers is provided with gas barrier properties. Suitable gas barrier polymers that can be employed for the gas barrier layer in each of the packaging components are PVDC, EVOH, polyamides, polyesters and blends thereof.

PVDC is any vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) and the blends thereof in different proportions. Generally a PVDC barrier layer will contain plasticisers and/or stabilizers as known in the art.

As used herein, the term EVOH includes saponified or hydrolyzed ethylene-vinyl acetate copolymers, and refers to ethylene/vinyl alcohol copolymers having an ethylene comonomer content preferably comprised from about 28 to about 48 mole %, more preferably, from about 32 to about 44 mole % ethylene, and even more preferably, and a saponification degree of at least 85%, preferably at least 90%.

The term polyamides is intended to refer to both homo- and co- or ter-polyamides. This term specifically includes aliphatic polyamides or co-polyamides, e.g., polyamide 6, polyamide 11, polyamide 12, polyamide 66, polyamide 69, polyamide 610, polyamide 612, copolyamide 6/9, copolyamide 6/10, copolyamide 6/12, copolyamide 6/66, copolyamide 6/69, aromatic and partially aromatic polyamides or co-polyamides, such as polyamide 6I, polyamide 6I/6T, polyamide MXD6, polyamide MXD6/MXDI, and blends thereof.

The term polyesters refers to polymers obtained by the polycondensation reaction of dicarboxylic acids with dihydroxy alcohols. Suitable dicarboxylic acids are, for instance, terephthalic acid, isophthalic acid, 2,6-naphthalene dicarboxylic acid and the like. Suitable dihydroxy alcohols are for instance ethylene glycol, diethylene glycol, 1,4-butanediol, 1,4-cyclohexanedimethanol and the like. Examples of useful polyesters include poly(ethylene terephthalate), and copolyesters obtained by reacting one or more dicarboxylic acids with one or more dihydroxy alcohols, e.g. PETG a glycol-modified polyethylene terephthalate.

As a gas barrier material also blends of EVOH with polyamides can suitably be employed.

The gas barrier support of the package of the present invention is made of a rigid or semi-rigid material and it can be flat or shaped, e. g. tray-shaped, bowl- shaped or cup-shaped.

Preferably the gas barrier support is made of a multilayer material comprising, in addition to a gas barrier layer, at least a heat-sealable layer to allow welding of the skin film to the part of the support not covered by the product.

The thickness of the gas barrier layer will be set in order to provide the support with an oxygen transmission rate at 0% RH lower than 15, lower than 10, preferably lower than 5 cm³/m².d.atm. The oxygen transmission rate at 100% RH is typically less than 150, less than 120, less than 100 cm³/m².d.atm.

Generally the heat-sealable layer will be selected among the polyolefins, such as ethylene homo- or co-polymers, propylene homo- or co-polymers, ethylene/vinyl acetate copolymers, ionomers, and the homo- and co-polyesters, e.g. PETG. Suitable heat-sealable layers may also include peelable blends to provide the package with an easy-to-open feature.

As used herein, the term " copolymer" refers to a polymer derived from two or more types of monomers, and includes terpolymers. Ethylene homopolymers include high density polyethylene (HDPE) and low density polyethylene (LDPE). Ethylene copolymers include ethylene/alpha-olefin copolymers and ethylene/unsaturated ester copolymers. Ethylene/alphaolefin copolymers generally include copolymers of ethylene and one or more comonomers selected from C₃ to C₂₀ alpha-olefins, such as 1-butene, 1-pentene, 1-hexene, 1-octene, 4-methyl-1-pentene and the like.

Ethylene/alpha-olefin copolymers generally have a density in the range of from about 0.86 to about 0.94 g/cm³. The term linear low density polyethylene (LLDPE) is generally understood to include that group of ethylene/alpha-olefin copolymers which fall into the density range of about 0.915 to about 0.94 g/cm³ and particularly about 0.915 to about 0.925 g/cm³. Sometimes linear polyethylene in the density range from about 0.926 to about 0.94 g/cm³ is referred to as linear medium density polyethylene (LMDPE). Lower density ethylene/alpha-olefin copolymers may be referred to as very low density polyethylene (VLDPE) and ultra-low density polyethylene (ULDPE). Ethylene/alpha-olefin copolymers may be obtained by either heterogeneous or homogeneous polymerization processes.

Another useful ethylene copolymer is ethylene/unsaturated ester copolymer, which is the copolymer of ethylene and one or more unsaturated ester monomers. Useful unsaturated esters include vinyl esters of aliphatic carboxylic acids, where the esters have from 4 to 12 carbon atoms, such as vinyl acetate, and alkyl esters of acrylic or methacrylic acid, where the esters have from 4 to 12 carbon atoms.

The term "ionomer" refers to the ionized or partially ionized form of a copolymer of ethylene with a copolymerisable ethylenically unsaturated carboxylic acid monomer selected from acrylic acid and methacrylic acid wherein the neutralizing cation can be any suitable metal ion, e.g. an alkali metal ion, a zinc ion, or other multivalent metal ions.

Useful propylene copolymers include propylene/ethylene copolymers (EPC), which are copolymers of propylene and ethylene having a majority weight percent content of propylene, and propylene/ethylene/butene terpolymers (EPB), which are copolymers of propylene, ethylene and 1-butene.

Additional layers, such as tie layers, to better adhere the gas-barrier layer to the adjacent layers, may be present in the gas barrier material for the support and are preferably present depending in particular on the specific resins used for the gas barrier layer.

In case of a multilayer structure, part of it can be foamed and part can be cast. For instance, the multilayer material used to form the support may comprise (from the outermost layer to the innermost food-contact layer) one or more structural layers, typically of a material such as polystyrene, polyester, poly(vinyl chloride), polypropylene or cardboard; a gas barrier layer and a heat-sealable layer.

The overall thickness of the support will typically be up to 8 mm, preferably it will be comprised between 0.2 and 7 mm and more preferably between 0.2 and 6 mm.

The skin film of the package of the present invention is also provided with gas barrier properties. Typically the skin film is a multilayer material comprising at least a first outer heat-sealable layer capable of welding to the surface of the support, an intermediate gas barrier layer and a second outer heat-resistant layer. Typically the thickness of the gas barrier layer in the skin film will be set in order to provide the skin film with an oxygen transmission rate at 0% RH lower than 15, lower than 10, preferably lower than 5 cm³/m².d.atm. Generally the oxygen transmission rate at 100% RH is less than 300, less than 280, less than 250 cm³/m².d.atm.

The outer heat-sealable layer may comprise any polymer capable of welding to the surface of the gas barrier support. Suitable polymers for the heat-sealable layer may be ethylene homo- or co-polymers, like LDPE, ethylene/alpha-olefin copolymers, ethylene/acrylic acid copolymers, ethylene/methacrylic acid copolymers, or ethylene/vinyl acetate copolymers, ionomers, co-polyesters, e.g. PETG. Preferred materials for the heat-sealable layer are LDPE, ethylene/alpha-olefin copolymers, ionomers, ethylene-vinyl acetate copolymers and blends thereof.

The gas barrier layer typically comprises oxygen impermeable resins like PVDC, EVOH, polyamides and blends of EVOH and polyamides.

Common polymers for the outer heat-resistant layer are for instance ethylene homo- or co-polymers, ethylene/cyclic-olefin copolymers, such as ethylene/norbornene copolymers, propylene homo- or co-polymers, ionomers, polyesters and polyamides.

The skin film may also comprise other layers such as adhesive layers, bulk layers and the like to provide the necessary thickness to the film and improve the mechanical properties thereof, such as puncture resistance, abuse resistance, formability and the like.

The skin film is obtained by any suitable co- extrusion process, either through a flat or a round extrusion die, preferably by cast coextrusion or by hot blown. Preferably, for use in a vacuum skin package the film is substantially non oriented. Typically the skin film, or only one or more of the thermoplastic layers thereof, is cross-linked to e.g. improve the strength of the film and/or the heat resistance when the film is brought in contact with the heated dome during the vacuum skin packaging process. Cross-linking may be achieved by using chemical additives or by subjecting the film layers to an energetic radiation treatment, such as a high-energy electron beam treatment, to induce cross- linking between molecules of the irradiated material.

Films suitable for this application have a thickness in the range of from 50 to 200 microns, from 70 to 160 microns. Suitable films for use as skin films in a vacuum skin packaging process are for instance those sold by Cryovac^{®} under the trade names TS201^{®} or TH300^{®}.

The gas barrier film component of the package of the present invention can be a mono- or a multilayer material either oriented or non-oriented and in the former case it can be either heat-shrinkable or non heat-shrinkable.

The gas barrier film has an oxygen transmission rate at 0% RH lower than 150, lower than 130, preferably lower than 100 cm³/m².d.atm. Generally the oxygen transmission rate at 100% RH is less than 300, less than 250, less than 200 cm³/m².d.atm.

Typically the gas barrier film is a multilayer film comprising at least a first outer heat-sealable layer, an intermediate gas barrier layer and a second outer layer. Suitable resins for the heat-sealable and the gas barrier layers being as indicated above for the skin film. The second outer layer is made, for instance, from materials chosen from the group of ethylene homo- and co-polymers, ethylene/vinyl acetate copolymers, ionomers, propylene homo- and co-polymers, polyesters and polyamides.

Films suitable as gas barrier film in the package of the present invention have a thickness in the range of from 12 to 100 microns, from 15 to 90 microns, from 20 to 80 microns.

Any type of food product which is generally packaged under vacuum may benefit from the shelf-life improvement provided by the package of the present invention, in particular products such as fresh red meat (e.g., beef, veal, lamb, pork, horse, etc.), poultry (e.g., chicken, turkey, duck, etc.), fish, including seafood and crustaceans, processed meat, cheese and some oxygen sensitive fruits and/or vegetables (e.g. sliced or precut fruits). The packaged product is generally selected from the group of fresh red meat, poultry and fish. Preferably the product is fresh red meat.

The gas barrier film defines a closed space above at least the skin portion of the vacuum skin package, said closed space being filled with an inert gas or gas mixture. For the scope of the present invention an inert gas is a gas which has no or limited chemical activity with respect to the packaged product. Suitable gases with no chemical activity with respect to the packaged product are hydrogen, helium, nitrogen, argon, xenon, krypton or mixtures thereof.

A suitable gas with limited chemical activity with respect to the packaged product is carbon dioxide.

Preferably, the inert gas present in the closed space in the package of the present invention is a gas with no chemical activity with respect to the packaged product. More preferably the inert gas is selected form the group consisting of hydrogen, nitrogen, argon or a mixture thereof. Even more preferably the inert gas is nitrogen.

The term " inert gas mixture" refers to mixtures which comprise a gas with no chemical activity as defined above and a supplementing gas of limited chemical activity, such as carbon dioxide.

Preferably the inert gas mixture comprises as the major component a gas with no chemical activity as defined above and a supplementing gas of limited chemical activity, such as carbon dioxide.

Suitable inert gas mixtures comprise from 1 to 49% by volume, 5 to 40% by volume, 10 to 30% by volume of carbon dioxide, and 51 to 99% by volume, 60 to 95% by volume, 70 to 90% by volume of a gas with no chemical activity, preferably nitrogen.

The residual amount of oxygen in the closed space defined by the barrier film above the packaged product should be as low as possible, ideally zero. Practically the residual oxygen in the closed space is less than 5% by volume of the inert gas or gas mixture, preferably less than 3% by volume, even more preferably less than 1% by volume.

Materials provided with oxygen scavenging properties may be employed in order to attain a low level of residual oxygen in the closed space defined by the barrier film. Such oxygen scavenging materials may either be incorporated in either one of the barrier film or the skin film or placed in the closed space defined by the barrier film, for instance in the form of a label or a sachet.

When the product is fresh red meat, e.g. beef, veal, lamb etc., a particularly effective gas or gas mixture comprises from 70 to 100% by volume of nitrogen and from 30 to 0% by volume of carbon dioxide.

The invention will be further illustrated with reference to the following drawings:
Fig. 1 is a sectional view of a first embodiment of the package of the present invention;
Fig. 2 is a sectional view of a second embodiment of the package of the present invention.

The same reference numbers will be used throughout the following description for indicating the same or functionally equivalent parts.

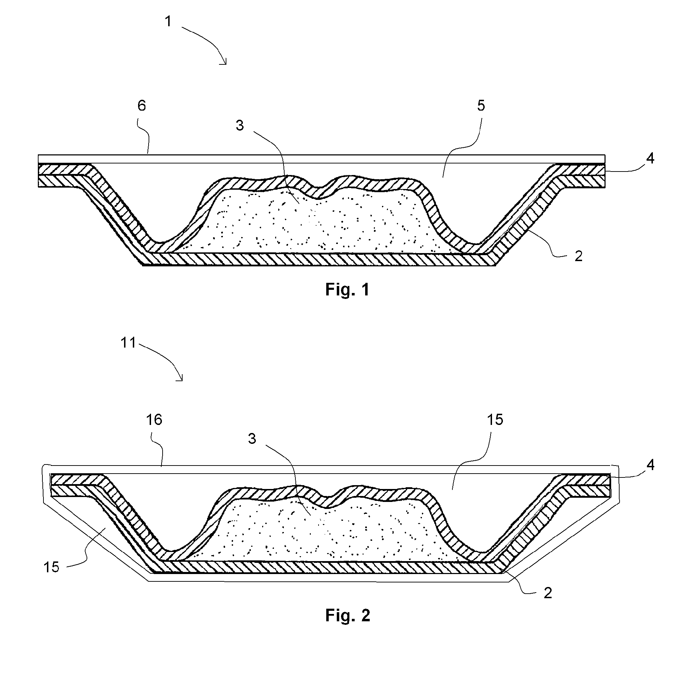

Fig. 1 shows a package 1 according to a first embodiment of the present invention. Package 1 comprises a gas barrier support 2 which is shown in the form of a tray comprising a bottom wall and upwardly extending side walls. A flange extends horizontally all around the perimeter of the tray support, projecting from the side walls. A product 3 is placed on the support. A skin film 4 has been draped over product 3 and support 2 via a vacuum skin packaging process and forms a tight skin over the product and over the part of the support not covered by the product, to which it is welded. The weld between the skin film and the support is preferably provided with an easy-to-open feature, to facilitate removal of the product by the consumer.

Gas barrier film 6 is hermetically sealed around the perimetral flange of support 2 defining a closed space 5 above the top surface of skin film 4. Closed space 5 is defined by the outermost surface of skin film 4, i.e. the surface not in contact with the product, and the surface of barrier film 6 facing the skin film. As shown in Fig. 1 barrier film 6 is sealed to the top surface of skin film 4. Alternatively, barrier film 6 could be sealed to the support, for instance to a marginal part of the flange of the support not covered by the skin film or to the underside of the flange.

Barrier film 6 is shown in Fig. 1 not in contact with the top surface of skin film 4 in any area but the flange of the support where the two films are sealed to one another. Barrier film 6 could alternatively be in contact with the top surface of skin film 4 also in other areas of the package, for instance in the area of the product. Closed space 5 is filled with an inert gas or gas mixture.

The outermost surface of barrier film 6 could be printed to provide information about the product to the consumer.

When the packaged product is meat, in particular fresh red meat, a particularly advantageous combination of packaging materials comprises a gas barrier support comprising one or more structural layers of polypropylene, polystyrene, poly(vinyl chloride), or polyester; an intermediate gas barrier layer of EVOH and a heat-sealable layer of an ethylene homo-or copolymer, such as an ethylene/vinyl acetate copolymer. The support is thermoformed in the shape of a tray and has a thickness in the range of 0.2 to 8 mm, preferably 0.2 to 6 mm. The skin film is a non-oriented cross-linked material which comprises an outer heat-resistant layer of an ethylene homo-or copolymer, such as high density polyethylene, an intermediate gas barrier layer of EVOH and a heat-sealable layer of an ethylene homo-or copolymer, such as low density polyethylene. The skin film has a thickness in the range of from 60 to 180 microns, preferably in the range of from 80 to 160 microns. The gas barrier film is a non-oriented material comprising an outer poly(ethylene terephthalate) layer, an intermediate gas barrier layer of EVOH and an outer heat-sealable layer of an ethylene homo-or copolymer, such as an ethylene/alpha-olefin copolymer or LDPE.The barrier film has a thickness in the range of from 20 to 80 microns, preferably of from 25 to 65 microns.

Fig. 2 shows a package according to a second embodiment of the present invention. Package 11 comprises a support 2 and a product 3 placed on the support. A skin film 4 has been draped over product 3 and support 2 via a vacuum skin packaging process. As indicated above, the skin film 4 intimately adheres to the surface of product 3, but also adheres intimately to the upper surface of the support 2, to which it is welded, so as to define an envelope which has substantially no gas space around the surface of the product 3.

Barrier film 16 forms a hermetically sealed envelope which completely surrounds the support, the product and the skin film and defines a closed space 15. Because there is no seal between the gas barrier film 16 of the sealed envelope and the support 2, closed space 15 also extends around the underneath of the support, thereby allowing for slightly more gas volume than would arise if the gas barrier film were to be sealed to the support. Closed space 15 is filled with an inert gas or gas mixture.

Gas barrier film 16 may be heat-shrinkable or not. Fig. 2 shows a package wherein a heat-shrinkable gas barrier film 16 has been subjected to a heat-shrinking operation, causing it to pull taut over both the upper and lower surfaces of the vacuum skin package. This has the advantage of improving the appearance of the package and to make it more readily stackable with other similar such packages for storage and/or transportation purposes. A further advantage of carrying out the heat-shrinking operation is that this will increase the pressure in the closed space 15 between the skin film 4 and the gas barrier film 16, thereby providing a cushion which will prevent the product from being crushed when stacked for storage. A suitable heat-shrinkable gas barrier film comprises a heat-sealable layer comprising one or more ethylene/alphaolefin copolymers, an intermediate gas barrier layer comprising EVOH and an outer layer having the same composition as the heat-sealable layer. The heat-shrinkable gas barrier film typically has a thickness of from 15 to 50 microns.

Depending on the height of the product and the depth of support 2 barrier film 16 may or may not be in contact with skin film 4.

According to a further embodiment of the present invention the hermetically sealed enclosure which completely surrounds the support, the product and the skin film may comprise two or more parts provided with gas barrier properties hermetically sealed together. For instance, said sealed enclosure could comprise a rigid thermoformed part in the form of a tray to which it is sealed a gas barrier film, the vacuum skin packaged product being housed in the tray and separated from the environment by the barrier film.

According to a second aspect of the present invention there is provided a packaging process comprising placing a product on a gas barrier support, placing a web of gas barrier skin film over the support and the product, allowing the gas barrier skin film to drape itself over the product and to weld to the part of the support not covered by the product to obtain a vacuum skin package, enclosing an inert gas or gas mixture in a closed space over at least the skin part of the vacuum skin package by means of a barrier film.

The barrier film may be secured to the vacuum skin package over the skin film draped over the product, for instance by heat-sealing, or, alternatively, it may form a hermetically sealed envelope completely enclosing the vacuum skin package.

The first part of the process corresponds to a well-known vacuum skin packaging process. Thus, a product to be packaged is placed on a gas barrier support, typically in the form of a tray. The gas barrier support may be shaped either in-line or off-line, usually with a thermoforming step and can be fed to the product loading station both as separate entity or as a continuous web of formed cavities. The product and the support are then advanced to a chamber where the skin film is drawn upward against a heated dome and the softened skin film is then draped over the product. The movement of the film is controlled by vacuum and/or air pressure and before final welding of the skin film to the support air is removed from the interior of the package.

According to a first embodiment of the packaging process of the present invention the vacuum skin package thus obtained is then advanced to a tray lidding station wherein a gas barrier film is placed over the skin portion of the vacuum skin package, the area between the skin portion of the vacuum skin package and the gas barrier film is evacuated and/or gas flushed with an inert gas or gas mixture before sealing of the gas barrier film to the perimetral flange of the vacuum skin package support. Thus, a closed space filled with an inert gas or gas mixture is created between the gas barrier film and the outermost surface of the skin film. This operation may be carried out either in-line with the vacuum skin packaging process on a suitably modified packaging machine, or off-line using a commercially available tray lidding machine. The package thus obtained is shown in Fig. 1.

In more detail, once the vacuum skin packaged product is advanced in the tray lidding station, the gas barrier film, fed from a roll, is positioned over the skin portion of the vacuum skin packaged product. Before sealing, the area between the gas barrier film and the outermost surface of the skin film is modified either by simply flushing with an inert gas or gas mixture or by firstly evacuating it and then back-filling with an inert gas or gas mixture. The gas or the gas mixture are selected to maximize the shelf-life of the product being packaged. Preferred inert gases to replace evacuated air include hydrogen, helium, nitrogen, xenon, argon, krypton and mixtures thereof. Once this step has been completed, the gas barrier film is then sealed to the perimetral flange of the support, typically to the outermost surface of the skin film. Sealing is carried out by means of a sealing frame which forms a continuous seal around the perimeter of the support. If needed the packages can be separated from one another in a cutting station.

If the gas barrier film is a heat-shrinkable film, shrinkage of the film can be accomplished either during the sealing operations, due to the heat generated by the sealing frame or in a separate step, for instance by means of a heated shrinking tunnel.

According to a second embodiment of the packaging process of the present invention, the vacuum skin packages obtained in the first part of the process, after being separated from one another if needed, are fed to a horizontal form-fill-seal process which may be either in-line with the vacuum skin packaging process or off-line. During the horizontal form-fill-seal process each vacuum skin package is introduced into an enclosure formed by a gas barrier film shaped as a tube which is then sealed at one end. Then the chosen inert gas or gas mixture is introduced through the still open end of the tube formed by the gas barrier film until eventually the interior of the tubular enclosure is charged with the appropriate atmosphere, following which the second end of the tubular enclosure can be sealed. Optionally, the introduction of the inert gas or gas mixture in the closed space may involve the extraction of atmospheric air by a vacuum step, followed by introduction of the appropriate inert atmosphere.

If the gas barrier film is a heat-shrinkable film it can then subjected to a final heat-shrinking operation in a suitable heated shrinking tunnel. A package as the one shown in Fig. 2 is thus obtained at the end of the packaging process.

The present invention will be illustrated by some examples, however the present invention is not limited to these examples.

### EXAMPLES 1-2

Packaging tests were performed to evaluate the shelf-life of fresh red meat with different inert gas/gas mixture combinations. The following packaging materials were used:
SUPPORT: a 280 microns thick cast material comprising two structural layers of polystyrene, an intermediate EVOH layer and a heat-sealable layer of an ethylene/vinyl acetate copolymer having an oxygen transmission rate of 2 cm³/m².d.atm at 0% RH and of 78 cm³/m².d.atm at 100% RH;
SKIN FILM: 100 microns thick cast material comprising an outer heat-resistant layer of HDPE, an intermediate gas barrier layer of EVOH and a heat-sealable layer of LDPE having an oxygen transmission rate of less than 5 cm³/m².d.atm at 0% RH and of 180 cm³/m².d.atm at 100% RH;
BARRIER FILM: non-shrinkable laminate comprising a first heat-sealable layer of a blend of LDPE and LLDPE, an intermediate gas barrier layer of EVOH and a second outer layer of poly(ethylene terephthalate) having an oxygen transmission rate of 6 cm³/m².d.atm at 0% RH and of 58 cm³/m².d.atm at 100% RH.

Rib-eye steaks from the same animal were vacuum skin packaged using a Multivac® R272CD machine and the above materials, the barrier film was heat-sealed to the skin film around the perimetral flange of the support, the closed space defined by the gas barrier film and the skin film was filled with the following gas composition:
EXAMPLE 1: 100% by volume nitrogen
EXAMPLE 2: 70% by volume nitrogen + 30% by volume CO₂

The amount of oxygen present in the closed space of the packages was in all cases below 0.2% by volume.

Reference vacuum skin packages were prepared using the same gas barrier support material and the same gas barrier skin material used for the examples. The reference packages were stored under ambient air.

The packages were stored at 3- 4°C in the dark. Checks were performed after 3, 4, 5, 6, 7 and 10 weeks after packaging for discoloration and bacterial load. The results are reported in Table 1 where the symbols have the following meaning:
- ○: no discoloration, bacterial load below limits for safe consumption of product
- △: discoloration, bacterial load below limits for safe consumption of product
- X: discoloration, bacterial load above limits for safe consumption of product

**Table 1**

| | 3 weeks | 4 weeks | 5 weeks | 6 weeks | 7 weeks | 10 weeks |
|---|---|---|---|---|---|---|
| Example 1 | ○ | ○ | ○ | ○ | ○ | ○ |
| Example 2 | ○ | ○ | ○ | ○ | △ | X |
| Reference | ○ | △ | X | X | X | X |

Although the invention has been described with reference to a vacuum skin packaging process it is not limited to it.

## Claims

1. A package comprising a gas barrier support, a product loaded on said support, a gas barrier skin film draped over the product and welded to the support by a vacuum skin packaging process and a gas barrier film defining a closed space over at least the skin portion of the vacuum skin packaged product, **characterised in that** said closed space is filled with an inert gas or gas mixture.

2. The package according to claim 1 wherein the barrier film lies above the skin film and it is sealed to it around the perimetral flange of the support.

3. The package according to claim 1 wherein the barrier film forms a hermetically sealed envelope around both the vacuum skin packaged product and the support.

4. The package according to any preceding claim wherein the inert gas is selected from the group consisting of hydrogen, helium, nitrogen, neon, argon, xenon, krypton, carbon dioxide and mixtures thereof.

5. The package according to any preceding claim wherein the inert gas is selected from the group consisting of hydrogen, helium, nitrogen, neon, argon, xenon, krypton and mixtures thereof.

6. The package according to any preceding claim wherein the inert gas is selected from the group consisting of hydrogen, nitrogen, argon and mixtures thereof.

7. The package according to any preceding claim wherein the skin film has an oxygen transmission rate at 0% RH lower than 15 cm³/m².d.atm.

8. The package according to any preceding claim wherein the barrier film has an oxygen transmission rate at 0% RH lower than 150 cm³/m².d.atm.

9. A packaging process comprising placing a product on a gas barrier support, placing a web of gas barrier skin film over the support and the product, allowing the gas barrier skin film to drape itself over the product and to weld to the part of the support not covered by the product to obtain a vacuum skin package, enclosing an inert gas or gas mixture in a closed space over at least the skin part of the vacuum skin package by means of a barrier film.

10. The process according to claim 9 wherein the barrier film is placed above the skin part of the vacuum skin package and it is sealed to the skin film around the perimetral flange of the support.

11. The process according to claim 9 wherein the barrier film envelopes and is hermetically sealed around the vacuum skin package.
